# EUROPÄISCHE PATENTANMELDUNG

(11) **EP 2 873 577 A2**
(43) Veröffentlichungstag der Anmeldung: **20.05.2015**
(21) Anmeldenummer: 14003754.0
(22) Anmeldetag: 07.11.2014
(51) Int. Cl.: B60W 50/14, B62D 15/02, B60W 30/095

(54) **Verfahren zum Betrieb eines Fahrerassistenzsystems zum Schutz eines Kraftfahrzeugs vor Beschädigungen bei einem Rangiervorgang und Kraftfahrzeug**

(30) Priorität: 19.11.2013 DE 102013019371
(71) Anmelder: AUDI AG, 85045 Ingolstadt (DE)
(72) Erfinder: Schuder, Claudia, DE - 85049 Ingolstadt (DE)
(74) Vertreter: Thielmann, Frank

(57) **Zusammenfassung**

Verfahren zum Betrieb eines Fahrerassistenzsystems (11) zum Schutz eines Kraftfahrzeugs (10) vor Beschädigungen bei einem Rangiervorgang, wobei bei Vorliegen eines für wenigstens einen Teil, insbesondere ein Rad, des Kraftfahrzeugs (10) ein Warnkriterium erfüllenden Kollisionsgefährdungswerts eine Warninformation in einer eine Aufsicht auf das Kraftfahrzeug (10) umfassenden Darstellung (1, 6, 9) an den Fahrer ausgegeben wird, wobei in Abhängigkeit eines aktuellen Lenkeinschlags ein bei Einhalten dieses Lenkeinschlags bestehender zukünftiger Fahrschlauch des Kraftfahrzeugs (10) ermittelt und in der auch eine Umgebung des Kraftfahrzeugs (10) umfassenden Darstellung (1, 6, 9) als Darstellungselement (4) wiedergegeben wird, wobei die Warninformation wenigstens teilweise in das Darstellungselement (4) des Fahrschlauchs integriert wird.

## Beschreibung

Die Erfindung betrifft ein Verfahren zum Betrieb eines Fahrerassistenzsystems zum Schutz eines Kraftfahrzeugs vor Beschädigungen bei einem Rangiervorgang, wobei bei Vorliegen eines für wenigstens einen Teil, insbesondere ein Rad, des Kraftfahrzeugs ein Warnkriterium erfüllenden Kollisionsgefährdungswerts eine Warninformation in einer eine Aufsicht auf das Kraftfahrzeug umfassenden Darstellung an den Fahrer ausgegeben wird.

Fahrerassistenzsysteme für Kraftfahrzeuge werden inzwischen häufig serienmäßig eingesetzt und nutzen üblicherweise die Daten verschiedener Sensoren des Kraftfahrzeugs, um daraus eine für den Fahrer nützliche Information zu generieren oder gar selbst einen Fahreingriff auszuführen, um den Fahrer zu entlasten oder vor Unfällen und dergleichen zu bewahren. Der Nahbereichsschutz des Kraftfahrzeugs ist dabei ein noch immer aktuelles Thema der Forschung, nachdem es gerade bei Rangiervorgängen, insbesondere bei einem Einparkvorgang, leicht zu Kollisionen und daraus resultierenden Beschädigungen des Kraftfahrzeugs kommen kann, insbesondere, was die Räder beziehungsweise die Felgen des Kraftfahrzeugs angeht. Mithin wurden bereits mehrere Fahrerassistenzsysteme vorgeschlagen, die sich mit dem Schutz eines Kraftfahrzeugs vor Beschädigungen bei Rangiervorgängen beschäftigen.

So wurde in DE 10 2008 028 222 A1 ein Verfahren und eine Vorrichtung zur Abstands- und Höhenbestimmung eines Fahrzeughindernisses und zur automatischen Verhinderung einer Beschädigung eines Fahrzeugs vorgeschlagen. Es werden aktive Sensoren, die eine Signalwelle emittieren, verwendet, um einen Abstand eines Fahrzeugs von einem Hindernis und eine Höhe des Hindernisses relativ zu dem Fahrzeug zu bestimmen. Abhängig von dem Abstand und von der Höhe kann entweder eine Information beispielsweise an den Fahrer des Kraftfahrzeugs ausgegeben werden oder automatisch ein Eingriff in die Führung des Kraftfahrzeugs vorgenommen werden. Um tatsächlich zu bewerten, ob ein in der Umgebung des Kraftfahrzeugs detektiertes Hindernis eine Gefahr darstellt, werden auch einige andere Parameter, beispielsweise die Geschwindigkeit des Fahrzeugs, der Auffahrwinkel eines Rades des Fahrzeugs und die Fahrspurtrajektorienprädiktion berücksichtigt. Konkret wird auch vorgeschlagen, eine Warninformation in einer Darstellung auszugeben, in der das Fahrzeug aus einer Vogelperspektive dargestellt ist, wobei alle vier Reifen des Fahrzeugs sichtbar sind. Dann können gefährdete Reifen, beispielsweise durch einen Bordstein gefährdete Reifen, hervorgehoben dargestellt werden. Dahingehend offenbart DE 10 2008 028 222 A1 ein gattungsgemäßes Verfahren.

Methoden zur Berechnung von Kollisionsgefährdungswerten und zur Auswertung von Warnkriterien sind im Stand der Technik ebenso bereits vielfältig bekannt und vorgeschlagen worden. So betrifft beispielsweise die DE 10 2011 014 699 A1 ein Verfahren zum Betrieb eines Fahrerassistenzsystems zum Schutz eines Kraftfahrzeugs vor Beschädigungen, wobei vorgeschlagen wird, als Sensor eine Weitwinkelkamera zu verwenden, wobei mittels eines Motion-Stereo-Verfahrens die dreidimensionalen Positionen von Objekten aus Bildern in unterschiedlichen Positionen des Kraftfahrzeugs ermittelt und entsprechend ausgewertet werden können.

Die bislang bekannten Möglichkeiten, eine Warninformation wiederzugeben, sind für den Fahrer meist nur schwer erfassbar, beispielsweise, wenn lediglich ein klein dargestelltes Rad hervorgehoben werden soll. Zudem werden sie nicht unmittelbar im Kontext zu seiner tatsächlichen Rangiertätigkeit gesetzt, bieten mithin keinen intuitiven Ansatzpunkt zur Verarbeitung der Information.

Der Erfindung liegt daher die Aufgabe zugrunde, eine Möglichkeit zur besseren Ausgabe einer Warninformation im Hinblick auf die Gesamtsituation anzugeben.

Zur Lösung dieser Aufgabe ist bei einem Verfahren der eingangs genannten Art erfindungsgemäß vorgesehen, dass in Abhängigkeit eines aktuellen Lenkeinschlags ein bei Einhalten dieses Lenkeinschlags bestehender zukünftiger Fahrschlauch des Kraftfahrzeugs ermittelt und in der auch eine Umgebung des Kraftfahrzeugs umfassenden Darstellung als Darstellungselement wiedergegeben wird, wobei die Warninformation wenigstens teilweise in das Darstellungselement des Fahrschlauchs integriert wird.

Mithin wird nicht nur eine weitere Information wiedergegeben, nämlich der sich ergebende Fahrschlauch bei dem aktuellen Lenkeinschlag, sondern diese durch ein Darstellungselement wiedergegebene Zusatzinformation wird auch benutzt, um gleichzeitig die Warninformation anzuzeigen. Das bedeutet, es wird ein gemeinsames Darstellungselement für den Fahrschlauch und die Warninformation eingesetzt, nachdem beide Informationen auch in einem unmittelbaren, nachvollziehbaren Zusammenhang zueinander stehen, denn häufig ist der Lenkeinschlag entscheidend dafür, ob es zu einer Kollision von Fahrzeugteilen, insbesondere Rädern, mit Objekten in der Umgebung des Kraftfahrzeugs, insbesondere Bordsteinen, kommt. Der Fahrer kann somit nicht nur sofort erkennen, wohin ihn der aktuelle eingeschlagene Lenkwinkel führt, sondern er sieht auch, ob der Lenkeinschlag zu einer Kollision führen wird oder nicht. Durch die klare und durch die Integration der Warninformation erweiterte Anzeige des Fahrschlauches in der Darstellung ist es dem Fahrer bequem möglich, sich kollisionsfrei im Bereich von Hindernissen, insbesondere eines Bordsteins, auszurichten, ohne die Felgen und/oder Reifen zu beschädigen.

Zur Ermittlung des Kollisionsgefährdungswerts und zur Prüfung des Kollisionsgefährdungswerts gegen das Warnkriterium sind im Stand der Technik bereits eine Vielzahl von Möglichkeiten bekannt. Dabei werden Daten verschiedener Umgebungssensoren ausgewertet, welche beispielsweise zur Aktualisierung eines wenigstens den Nahbereich um das Kraftfahrzeug umfassenden Umfeldmodells verwendet werden können, in dem die verschiedenen kollisionsträchtigen Elemente, insbesondere auch Bordsteine, abgelegt sind. Nachdem nun Abmessungen und sonstige Eigenschaften des eigenen Kraftfahrzeugs bekannt sind, kann unter Kenntnis beziehungsweise Detektion der zukünftigen Trajektorie, insbesondere also des genannten Fahrschlauchs, leicht eine Beurteilung stattfinden, ob eine Kollisionsgefahr besteht, wobei sich das erfindungsgemäße Fahrerassistenzsystem bevorzugt auf Beschädigungen an den Rädern, also insbesondere der Felgen und/oder der Reifen, bezieht, und der Kollisionsgefährdungswert im Hinblick auf Bordsteine oder ähnliche niedrige Objekte im Nahbereich um das Kraftfahrzeug ermittelt wird.

Um dem Fahrer Informationen zur Kritikalität des bei dem Lenkeinschlag bevorstehenden Fahrmanövers zu vermitteln, indem die Warninformation in das Darstellungselement des Fahrschlauchs integriert wird, existieren verschiedene zweckmäßige Möglichkeiten.

So kann vorgesehen sein, dass die Warninformation durch Einfärbung wenigstens eines Teils des Darstellungselements angezeigt wird. Das bedeutet, es ist insbesondere möglich, den Fahrschlauch je nachdem, ob ein Warnkriterium erfüllt ist, verschieden einzufärben. Dabei ist zum einen ein binäres Anzeigekonzept denkbar, so dass beispielsweise dann, wenn kein Warnkriterium erfüllt ist, der Fahrschlauch in weiß dargestellt wird, jedoch dann, wenn ein Warnkriterium erfüllt ist, der Fahrschlauch wenigstens teilweise in einer gänzlich unterschiedlichen Farbe angezeigt wird, beispielsweise in rot.

Eine vorteilhafte Weiterbildung der Erfindung sieht vor, dass eine von dem Kollisionsgefährdungswert abhängige Einfärbung erfolgt. Denkbar ist es mithin auch, unterschiedliche Farben in Abhängigkeit des Kollisionsgefährdungswertes zu verwenden, so dass beispielsweise die Farbe Grün für den Fahrschlauch anzeigt, dass keine Kollisionsgefahr besteht, die Farbe Gelb, dass eine mittlere Kollisionsgefahr besteht und Rot, dass eine hohe Kollisionsgefahr besteht. Es ist jedoch auch denkbar, kleinere Abstufungen vorzusehen, beispielsweise also die Farbe unmittelbar durch einen Zusammenhang mit dem Kollisionsgefährdungswert zu parametrieren und dergleichen, so dass mit steigendem Kollisionsgefährdungswert die Farbe beispielsweise langsam von Gelb über Orange zu Rot übergehen kann.

Wie bereits deutlich wurde, wird es erfindungsgemäß bevorzugt, wenn die Einfärbung bei erfülltem Warnkriterium in Rot und/oder Gelb und/oder Orange erfolgt. Dabei handelt es sich um grundsätzlich dem Fahrer bekannte Warnfarben, die dessen Aufmerksamkeit besonders auf die Fahrsituation lenken und sich auch deutlich von den üblicherweise für reine Informationselemente verwendeten Farben, beispielsweise Weiß oder Grün, unterscheidet.

Eine besonders zweckmäßige Ausgestaltung der vorliegenden Erfindung sieht vor, dass bei nur für wenigstens einen Teil, insbesondere ein Rad, einer Seite des Kraftfahrzeugs erfülltem Warnkriterium die Integration derart erfolgt, dass diese Seite hervorgehoben wird, insbesondere durch Einfärbung einer seitlichen Begrenzung des Fahrschlauchs. Wird also beispielsweise der Fahrschlauch als Darstellungselement durch zwei äußere Begrenzungen des Fahrschlauchs dargestellt, ist es denkbar, eine dieser Begrenzungen, auf der Seite die durch den Kollisionsgefährdungswert beschriebene Kollisionsgefahr besteht, hervorzuheben, insbesondere einzufärben. Liegt beispielsweise eine Kollisionsgefährdung am hinteren rechten Rad vor, ist es denkbar, dass eine die rechte Begrenzung des Fahrschlauchs anzeigende Markierung eingefärbt wird, beispielsweise in Rot oder abhängig von dem Kollisionsgefährdungswert in einer entsprechend zugeordneten Farbe. Auf diese Weise wird dem Fahrer auch signalisiert, wo die Kollisionsgefährdung konkret vorliegt.

Gerade in diesem Zusammenhang ist es auch zweckmäßig, wenn zusätzlich zu der Integration eines Teils der Warninformation in das Darstellungselement des Fahrschlauchs bei einem erfüllten, ein Rad des Kraftfahrzeugs betreffenden Warnkriterium in der Darstellung auch das betroffene Rad hervorgehoben, insbesondere eingefärbt, wird. Hierdurch erfolgt eine weiter verfeinerte Informationswiedergabe, die vom Fahrer noch besser zugeordnet werden kann. Insbesondere wird diese Hervorhebung von Rädern üblicherweise unmittelbar an eine Hervorhebung eines dieselbe Seite betreffenden Teils des Darstellungselements, mithin des Fahrschlauchs, anschließen, so dass sich für den Fahrer ein zusammenhängend erfassbares Gesamtbild in der Darstellung ergibt.

Das erfindungsgemäße Verfahren lässt sich besonders zweckmäßig gemeinsam mit einer sogenannten "Top-View-Darstellung" eines Top-View-Systems realisieren. Bei einem Top-View-System sind üblicherweise Kameras, insbesondere Weitwinkelkameras, vorgesehen, die das Umfeld des Kraftfahrzeugs nach allen Seiten abdecken. Mithin kann vorgesehen sein, dass wenigstens ein die Umgebung des Kraftfahrzeugs betreffendes Darstellungselement der Darstellung aus Kameradaten einer Top-View-Kamera erzeugt wird. Die Daten der dem Top-View-System zugeordneten Kameras, wie erwähnt insbesondere Weitwinkelkameras, lassen sich also zu einer weiteren Verbesserung der Darstellung nutzen, indem die Umgebung des Kraftfahrzeugs in tatsächlich aufgenommenen Kameradaten beziehungsweise daraus abgeleiteten Informationen dargestellt wird. Besonders zweckmäßig ist es in diesem Zusammenhang, wenn die Kameradaten einer nach vorne gerichteten Top-View-Kamera, einer nach hinten gerichteten Top-View-Kamera und von zwei jeweils zu einer Seite des Kraftfahrzeugs gerichteten Top-View-Kameras in jeweiligen Darstellungselementen der Darstellung verwendet werden. Dann ist das gesamte Umfeld des Kraftfahrzeugs abgedeckt.

Im Rahmen der vorliegenden Erfindung kann selbstverständlich vorgesehen sein, dass bei jeder Änderung des Lenkwinkels eine Neuberechnung des Fahrschlauchs und des wenigstens einen Kollisionsgefährdungswertes erfolgt, wobei die Darstellung entsprechend dem neuen Fahrschlauch und einer erneuten Auswertung des wenigstens einen Warnkriteriums aktualisiert wird. Auf diese Weise kann der Fahrer also unmittelbar erkennen, ob die Veränderung des Lenkwinkels, die von ihm vorgenommen wurde, zu einer Beseitigung der Gefährdung führt oder nicht. Führen also die Lenkbewegungen des Fahrers zu einem niedrigeren Kollisionsgefährdungswert, ist also das Warnkriterium nicht mehr erfüllt, wird der Fahrschlauch ohne jegliche Warninformation dargestellt, was dem Fahrer die Sicherheit des Fahrvorgangs vermittelt.

Neben dem Verfahren betrifft die Erfindung auch ein Kraftfahrzeug, umfassend ein Fahrerassistenzsystem zum Schutz des Kraftfahrzeugs vor Beschädigungen bei einem Rangiervorgang mit einem zur Durchführung des erfindungsgemäßen Verfahrens ausgebildeten Steuergerät. Dabei sind dem Fahrerassistenzsystem üblicherweise Umfeldsensoren zugeordnet, deren Sensordaten ebenso durch das Steuergerät ausgewertet werden können, um einen Kollisionsgefährdungswert, insbesondere für die jeweiligen Räder des Kraftfahrzeugs, zu bestimmen. Auch ist das Steuergerät ausgebildet, den Kollisionsgefährdungswert gegen ein Warnkriterium auszuwerten, so dass dann insbesondere der Schritt eingeleitet werden kann, die Warninformation wenigstens teilweise in das Darstellungselement des Fahrschlauchs, welcher auch durch das Steuergerät ermittelt werden kann, zu integrieren. Dabei sei angemerkt, dass selbstverständlich auch weitere und/oder andere Teile der Warninformationen über sonstige Ausgabemittel neben einer Anzeigevorrichtung ausgegeben werden können, beispielsweise akustische Signale über entsprechende akustische Ausgabemittel und dergleichen. In jedem Fall lassen sich sämtliche Ausführungen zum erfindungsgemäßen Verfahren auch analog auf das erfindungsgemäße Kraftfahrzeug übertragen, mit welchen mithin die bezüglich des Verfahrens bereits genannten Vorteile erreicht werden können.

Weitere Vorteile und Einzelheiten der vorliegenden Erfindung ergeben sie aus den im Folgenden beschriebenen Ausführungsbeispielen sowie anhand der Zeichnung. Dabei zeigen:
- Fig. 1: eine anzuzeigende Darstellung in einer ersten Verkehrssituation,
- Fig. 2: eine anzuzeigende Darstellung in einer zweiten Verkehrssituation,
- Fig. 3: eine anzuzeigende Darstellung in einer dritten Verkehrssituation, und
- Fig. 4: eine Prinzipskizze eines erfindungsgemäßen Kraftfahrzeugs.

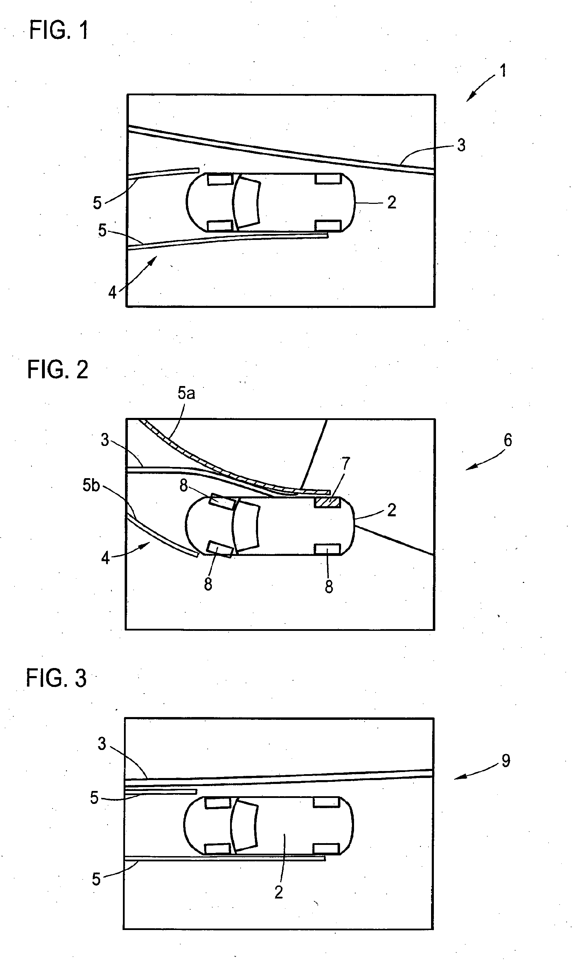

Das erfindungsgemäße Verfahren betrifft die besonders vorteilhafte und intuitiv wahrnehmbare Wiedergabe einer Warninformation, die anzeigen soll, dass für zumindest ein Rad eines Kraftfahrzeugs eine Kollisionsgefahr vorliegt, was durch Auswertung eines Kollisionsgefährdungswerts gegen ein Warnkriterium festgestellt werden kann. Dies wird erreicht, indem auch ein zukünftiger Fahrschlauch des Kraftfahrzeugs beim aktuell eingeschlagenen Lenkwinkel, also dem aktuellen Lenkeinschlag, ermittelt wird, so dass als Darstellungselement dieser Fahrschlauch in einer eine Aufsicht auf das Kraftfahrzeug und dessen Umgebung anzeigenden Darstellung wiedergegeben werden kann. Soll eine Warninformation ausgegeben werden, wird diese in das Darstellungselement integriert, wie anhand der Figuren 1 - 3 näher erläutert werden soll.

Dabei sei an dieser Stelle noch angemerkt, dass die dort gezeigten Darstellungen mehrere Darstellungselemente enthalten, nämlich zunächst ein Darstellungselement, das einer Aufsicht auf das Kraftfahrzeug entspricht und zentral angeordnet ist. In diesem Kraftfahrzeug-Darstellungselement sind auch die Räder des Kraftfahrzeugs erkennbar. Die Darstellung des Umfelds des Kraftfahrzeugs setzt sich vorliegend aus vier Umfeld-Darstellungselementen zusammen, deren Inhalt aus den Kameradaten von zu den jeweiligen Seiten des Kraftfahrzeugs orientierten Top-View-Kameras gewonnen wird, wie dies im Stand der Technik grundsätzlich bekannt ist.

Fig. 1 zeigt nun eine erste Darstellung 1 mit dem zentralen Kraftfahrzeug-Darstellungselement 2 in einer Ausparksituation, also bei einem Rangiervorgang. Ersichtlich ist im Umfeld des Kraftfahrzeugs ein Bordstein 3 erkennbar, mit dem bei bestimmten Lenkeinschlägen eine Kollision eines Rades auftreten kann. Vorliegend zeigt der Lenkeinschlag des Kraftfahrzeugs jedoch nach links von dem Bordstein 3 weg, so dass sich ein gefährdungsfreier Fahrschlauch ergibt, der durch das Darstellungselement 4 wiedergegeben wird. Dabei werden vorliegend die beiden Begrenzungen 5 des Fahrschlauchs in Weiß eingeblendet, was anzeigt, dass bei dem aktuellen Lenkeinschlag keinerlei Gefährdung gegeben ist, mithin kein Warnkriterium erfüllt ist.

Ein anderer Fall liegt in der Darstellung 6 gemäß Fig. 2 vor. Dabei ist ein auf einen Bordstein 3 zuführender Lenkeinschlag gegeben, so dass für den hinteren rechten Reifen 7 das Warnkriterium erfüllt ist, da bei Halten des Lenkeinschlags eine Kollision mit dem Bordstein 3 bevorsteht. Entsprechend muss eine Warninformation ausgegeben werden, was vorliegend dadurch erfolgt, dass die rechte Begrenzung 5a des Fahrschlauchs als Teil des Darstellungselements 4 in Rot dargestellt wird, was sich deutlich von der linken, weiterhin in Weiß dargestellten Begrenzung 5b unterscheidet. Auf diese Weise erkennt der Fahrer nicht nur, dass eine Gefährdung des Kraftfahrzeugs vorliegt, sondern auch, auf welcher Seite des Kraftfahrzeugs die Gefahr besteht. Um diese Informationslage noch weiter zu verbessern, wird zudem das betroffene Rad 7 hervorgehoben im Vergleich zu den anderen Rädern 8 dargestellt, im vorliegenden Fall auch rot eingefärbt.

Dabei sei an dieser Stelle angemerkt, dass die konkrete Einfärbung der Begrenzung auch abhängig vom Kollisionsgefährdungswert gewählt werden kann, so dass beispielsweise die Einfärbung ausgehend von Gelb mit steigender Kritikalität immer mehr gegen Rot geht.

Die anzuzeigenden Darstellungen 1, 6 werden ständig aktualisiert, so dass der Fahrer auch die Auswirkungen von Veränderungen des Lenkeinschlags jederzeit sofort nachvollziehen kann. Lenkt der Fahrer von einer als kritisch angezeigten Situation beispielsweise weiter und gelangt er wieder in eine unkritische Situation, wie beispielsweise in der Darstellung 9 in Fig. 3 dargestellt ist, werden die Begrenzungen 5 wieder beide in Weiß dargestellt. Dort liegt der Fahrschlauch gerade so, dass keine Kollision mit dem Bordstein 3 auftritt.

Mithin wird dem Fahrer ein hervorragendes, das Rangieren in der Nähe von Hindernissen erleichterndes Hilfsmittel an die Hand gegeben, welches einen hohen intuitiven Informationsgehalt liefert.

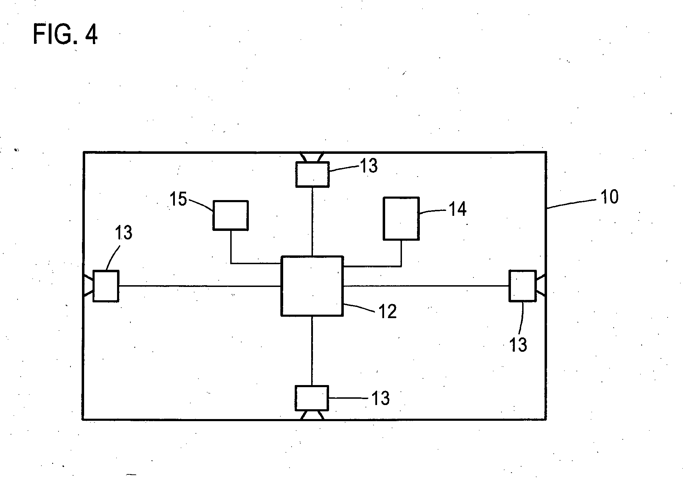

Fig. 4 zeigt schließlich eine Prinzipskizze eines erfindungsgemäßen Kraftfahrzeugs 10, welches ein Fahrerassistenzsystem 11 zum Schutz des Kraftfahrzeugs 10 vor Beschädigung bei einem Rangiervorgang aufweist. Das Fahrerassistenzsystem 11 umfasst ein Steuergerät 12, das zur Durchführung des erfindungsgemäßen Verfahrens ausgebildet ist. Es empfängt Daten verschiedener Umfeldsensoren, beispielsweise der hier dargestellten Top-View-Kameras 13, wobei selbstverständlich auch Daten weiterer Umfeldsensoren erfasst und verarbeitet werden können. Letztlich wird hieraus eine Darstellung 1, 6, 9 erzeugt, die das Kraftfahrzeug-Darstellungselement 5, Umgebungs-Darstellungselemente aufgrund der Daten der Top-View-Kameras 13 sowie weitere Darstellungselemente enthält. Eines dieser Darstellungselemente ist das Darstellungselement 4 für den Fahrschlauch beim aktuell eingestellten Lenkeinschlag, welcher beispielsweise durch einen Lenkwinkelsensor 14 erfasst werden kann. Bei einem erfüllten Warnkriterium für die auch durch das Steuergerät 12 für die verschiedenen Räder des Kraftfahrzeugs ermittelten Kollisionsgefährdungswerte integriert das Steuergerät 12 die Warninformation wie bezüglich der Figuren 1 bis 3 beschrieben teilweise in die entsprechende Darstellung 1, 6, 9. Die Darstellung 1, 6, 9 kann an einer entsprechenden, durch den Fahrer gut einsehbaren Anzeigevorrichtung 15 wiedergegeben werden, wobei für andere Warninformationen oder andere Teile der Warninformation auch weitere Ausgabemittel vorgesehen sein können.

## Patentansprüche

1. Verfahren zum Betrieb eines Fahrerassistenzsystems (11) zum Schutz eines Kraftfahrzeugs (10) vor Beschädigungen bei einem Rangiervorgang, wobei bei Vorliegen eines für wenigstens einen Teil des Kraftfahrzeugs (10) ein Warnkriterium erfüllenden Kollisionsgefährdungswerts eine Warninformation in einer eine Aufsicht auf das Kraftfahrzeug (10) umfassenden Darstellung (1, 6, 9) an den Fahrer ausgegeben wird, wobei in Abhängigkeit eines aktuellen Lenkeinschlags ein bei Einhalten dieses Lenkeinschlags bestehender zukünftiger Fahrschlauch des Kraftfahrzeugs (10) ermittelt und in der auch eine Umgebung des Kraftfahrzeugs (10) umfassenden Darstellung (1, 6, 9) als Darstellungselement (4) wiedergegeben wird,
**dadurch gekennzeichnet,**
**dass** die Warninformation wenigstens teilweise in das Darstellungselement (4) des Fahrschlauchs integriert wird, wobei bei nur für wenigstens einen Teil einer Seite des Kraftfahrzeugs (10) erfülltem Warnkriterium die Integration derart erfolgt, dass diese Seite hervorgehoben wird.

2. Verfahren nach Anspruch 1,
**dadurch gekennzeichnet,**
**dass** die Warninformation durch Einfärbung wenigstens eines Teils des Darstellungselements (4) angezeigt wird.

3. Verfahren nach Anspruch 2,
**dadurch gekennzeichnet,**
**dass** eine von dem Kollisionsgefährdungswert abhängige Einfärbung erfolgt.

4. Verfahren nach Anspruch 2 oder 3,
**dadurch gekennzeichnet,**
**dass** die Einfärbung bei erfülltem Warnkriterium in Rot und/oder Gelb und/oder Orange erfolgt.

5. Verfahren nach einem der vorangehenden Ansprüche,
**dadurch gekennzeichnet,**
**dass** die Hervorhebung der Seite durch Einfärbung einer seitlichen Begrenzung (5, 5a, 5b) des Fahrschlauchs erfolgt.

6. Verfahren nach einem der vorangehenden Ansprüche,
**dadurch gekennzeichnet,**
**dass** bei einem erfüllten, ein Rad des Kraftfahrzeugs (10) betreffenden Warnkriterium in der Darstellung (1, 6, 9) auch das betroffene Rad (7) hervorgehoben wird.

7. Verfahren nach einem der vorangehenden Ansprüche,
**dadurch gekennzeichnet,**
**dass** wenigstens ein die Umgebung des Kraftfahrzeugs (10) betreffendes Darstellungselement der Darstellung (1, 6, 9) aus Kameradaten einer Top-View-Kamera (13) erzeugt wird.

8. Verfahren nach Anspruch 7,
**dadurch gekennzeichnet,**
**dass** die Kameradaten einer nach vorne gerichteten Top-View-Kamera (13), einer nach hinten gerichteten Top-View-Kamera (13) und von zwei jeweils zu einer Seite des Kraftfahrzeugs (10) gerichteten Top-View-Kameras (13) in jeweiligen Darstellungselementen der Darstellung (1, 6, 9) verwendet werden.

9. Verfahren nach einem der vorangehenden Ansprüche,
**dadurch gekennzeichnet,**
**dass** bei jeder Änderung des Lenkwinkels eine Neuberechnung des Fahrschlauchs und des wenigstens einen Kollisionsgefährdungswertes erfolgt, wobei die Darstellung (1, 6, 9) entsprechend dem neuen Fahrschlauch und einer erneuten Auswertung des wenigstens einen Warnkriteriums aktualisiert wird.

10. Kraftfahrzeug (10), umfassend ein Fahrerassistenzsystem (11) zum Schutz des Kraftfahrzeugs (10) vor Beschädigungen bei einem Rangiervorgang mit einem zur Durchführung eines Verfahrens nach einem der vorangehenden Ansprüche ausgebildeten Steuergerät (12).
